# EUROPÄISCHE PATENTSCHRIFT

(11) **EP 1 062 292 B1**
(45) Veröffentlichungstag und Bekanntmachung des Hinweises auf die Patenterteilung: **09.10.2002**
(21) Anmeldenummer: 99916786.9
(22) Anmeldetag: 12.03.1999
(51) Int. Cl.: C09K 3/18

(54) **WINTERSTREUMITTEL**
WINTER GRIT
SUBSTANCE ANTIGEL

(30) Priorität: 12.03.1998 DE 19810831; 27.01.1999 DE 19903218; 08.03.1999 DE 19909858
(43) Veröffentlichungstag der Anmeldung: 27.12.2000
(73) Patentinhaber: Innovation Pro Terra GmbH & CO. KG, 76316 Malsch (DE); Hofmann, Klaus, 97320 Albertshofen (DE)
(72) Erfinder: HOFMANN, Klaus, D-97320 Albertshofen (DE); KINKEL, Werner, D-96049 Bamberg (DE)
(74) Vertreter: Kunz, Herbert, Dr.
(86) Internationale Anmeldenummer: DE9900690
(87) Internationale Veröffentlichungsnummer: WO99046352

(56) Entgegenhaltungen:
- EP-A- 0 083 695
- EP-A- 0 301 337
- WO-A-87/03293
- DE-A- 1 459 652
- DE-A- 3 028 372
- DE-A- 3 420 682
- DE-A- 3 431 371
- DE-A- 3 523 527
- DE-A- 19 602 925
- FR-A- 2 682 682

## Beschreibung

Die vorliegende Erfindung betrifft ein Winterstreumittel gemäß dem Oberbegriff des Anspruchs 1.

Es ist allgemein bekannt, dass in jedem Winter riesige Mengen von Streusalz bzw. Mittel zur Erniedrigung des Gefrierpunktes auf Straßen, Gehwegen und in Fabrikanlagen ausgebracht werden, um die erforderliche Verkehrssicherheit zu gewährleisten. Nach jeder Streuperiode sind aufgrund der Verwendung von Streusalz an den Pflanzen des straßenbegleitenden Grüns und an sonstigen betroffenen Pflanzen erhebliche Schäden zu beobachten.

Auch Schäden an Gebäuden, am Straßenbelag, an Denkmälern, im Grundwasser, und nicht zu vergessen an Fahrzeugen sind in die Regel und erreichen astronomische Höhen.

Streusalz wirkt auf Schnee- und Eisglätte in wohl jedermann bekannter Weise. Das Salz wirkt auftauend und verhindert die gefürchteten Schnee- und Eisglätten. Das hierbei entstehende Tauwasser wird entweder in bestehende Entwässerungssysteme eingeleitet und belastet somit die aufnehmenden Kläranlagen und die Flüsse, oder es wird als Spritzwasser in die Umwelt eingebracht. Die schädigende Wirkung ist hinreichend bekannt.

Zusätzlich kann die ausgebrachte Menge an Streusalz nach dem Auftauen von Eis durch den Wegtransport mit dem aufgetauten Wasser in die Entwässerungssysteme einem erneuten Gefrieren von Wasser nicht weiter entgegenwirken. Das heißt, nach erfolgreichem Auftauen eines über Nacht entstandenen Eises ist kein Rest-Streusalz vorhanden, um einem in der darauffolgenden Nacht eventuell erneuten Gefrieren entgegenzuwirken.

Ferner ist es zum Schutz der Umwelt immer wieder notwendig, naturgefährdende Stoffe zu ersetzen, ihr häufiges bestehendes Anwendungsrisiko zu minimieren und wo sie wohl unvermeidbar sind, sie so zu dosieren, dass eine längere Nutzungsdauer damit verbunden ist. Zusätzlich fallen häufig in der Natur, regional unterschiedlich, große Mengen Stoffe an, welche z. B. wegen das niedrigen Gewichtes bei großem Volumen, und wegen geringen Wertes wirtschaftlich nicht transportfähig sind. Sie werden deswegen kaum genutzt und benötigen eine Wertschöpfung um Flächendeckend verwendet werden zu können.

Aufgabe der vorliegenden Erfindung ist es somit, den wohl notwendigen Anteil an einem Mittel zur Erniedrigung des Gefrierpunktes soweit möglich zu ersetzen, zumindest aber auf ein Mindestmaß zurückzuführen.

Ferner ist es eine Aufgabe, darauf zu achten die Abfall- und Entsorgungsprodukte miteinander so zu verbinden, dass eine wirtschaftliche und nutzbringende Anwendung möglich ist.

Gelöst wurden diese Aufgaben mit den Merkmalen des Anspruchs 1.

Durch die Beimischung von Feuchtigkeit aufnahmefähigen Bestandteilen, vorzugsweise aus natürlichen Ursprung, zum hauptsächlich verwendeten Mittel zur Erniedrigung des Gefrierpunktes wird erreicht, dass durch die Saugfähigkeit dieser Bestandteile der erwünschte nützliche Effekt auftritt, dass bei wiedereinsetzendem Frost durch Begehen bzw. Befahren ein solches Streugut die aufgesaugten Flüssigkeitsteile zum Teil wieder freigibt und erneut zum Auftauen verwendet werden können.

Aufgrund der Saugfähigkeit der Bestandteile wird erreicht, dass durch die Aufnahme der aufgetauten Flüssigkeit die Bestandteile naturgemäß wesentlich schwerer sind und daher auch nicht mehr so windempfindlich wie im trockenen Zustand wären. Teilweise kommt es dazu, dass die Bestandteile auch auf dem Straßenbelag festkleben. Durch den Taueffekt des Mittels zur Erniedrigung des Gefrierpunktes, welches zur Bildung von Schmelz- oder Tauwasser führt, wird dieses bis zur Sättigung der Bestandteile, deren Aufnahmefähigkeit beispielsweise bei der Verwendung von Hanfschäben bis zu 500% betragen kann, von diesen aufgenommen. Durch diese Aufnahmefähigkeit kann es beispielsweise schon bei geringem Flüssigkeitsanfall zu einer Abtrocknung des Verkehrsweges führen.

Ferner enthält die von den Bestandteilen aufgenommene Flüssigkeit zusätzlich nun auch die entsprechenden Salzbestandteile.

Sollte es zu einer deutlichen Frostabschwächung bzw. zu einer trockenen Wetterlage kommen, die allgemein wenig Glättegefahr mit sich bringt, werden die Bestandteile entweder durch die Fahrzeuge an den Straßerand befördert oder auf die Bankette geweht. Hier könne sie entweder aufgenommen und wiederverwertet bzw. wieder eingesetzt werden oder bis zur biologischen Verrottung verbleiben.

Grundsätzlich kann aber erfindungsgemäß die zusätzliche Belastung der Umwelt durch das Streusalz auf ein Mindestmaß reduziert werden, da das Streusalz nicht zwangsläufig in die Kanalisation und somit in die Klärwerke geleitet wird, sondern häufig mit den vollgesaugten Bestandteilen eingesammelt werden kann, wodurch allein in Deutschland zusätzlich einige zigtausend Tonnen Streusalz einzusparen wären. Auch eine Ausbringung solcher Mischmaterialien über die überall vorhandenen Streugeräte für den Winterdienst dürfte absolut unproblematisch sein. Eine spezielle Anpassung der momentan vorhandenen Streufahrzeuge müsste in keinster Weise vorgenommen werden.

Es hatte sich als positiv herausgestellt, wenn die Feuchtigkeit durch holzartige Bestandteile von Pflanzen aufgesaugt wird, und zwar aus der Herstellung von Bastfasern, von Blattfasern, von Samenfasern oder von Fruchtfasern. Hierzu werden erfindungsgemäß die vielfach als Abfallprodukt anfallenden Pflanzenschäben herangezogen, welche häufig zum Teil unter großem Kostenaufwand entsorgt wurden. Dem gegenüber können die Pflanzenschäben nützlich eingesetzt werden und die Kostenbelastung reduziert werden. An dieser Stelle soll darauf hingewiesen werden, dass unter dem Begriff Schäben diejenigen pflanzlichen Anteile zu verstehen sind, die bei der Gewinnung von Fasern aus Faserpflanzen anfallen und auch als bastartige Stengelhüllen bekannt sind.

Die Verwendung durch Pflanzenschäben führt auch dazu, dass durch die Beimischung des Schäbenmaterials ein günstiger Soforteffekt bei Straßenglätte erzielt wird, wobei durch die Schäbenanteile auch die eventuell bei nassem Gehwegen auftretende Rutschgefahr in vorteilhafter Weise entgegengewirkt werden kann.

Auch hat sich herausgestellt, dass die vorteilhafte Wirkung dann erzielt wird, wenn die Bestandteile eine Struktur aufweisen, die ein Längs-zu-Quer-Verhältnis von größer als 2 zu 1, aufweist.

Weitere vorteilhafte Weiterbildungen der vorliegenden Erfindung sind Gegenstand der Unteransprüche.

Es ist gemäß Anspruch 2 von Vorteil, wenn das Mittel zur Erniedrigung des Gefrierpunkts Streusalz ist, weil es nach wie vor die einzig sichere Methode darstellt, rasch auf Eis eine wieder begeh- oder befahrbare Oberfläche darzustellen.

Gemäß Anspruch 3 wird der Vorteil erzielt, dass als Alternative zum körnigen Salz eine flüssige Sprühsalzlösung sehr schnell in die Feuchtigkeit aufnehmenden Bestandteile eingebracht werden kann, was die Lagerhaltung erleichtert. Solche flüssige Salzlösungen treten beim Abbau von Salz in großen Mengen auf, finden bisher aber nur begrenzt Einsatzmöglichkeiten.

Es hat sich als vorteilhaft herausgestellt, wenn gemäß Anspruch 5 die Feuchtigkeit durch holzartige Bestandteile von Pflanzen aufgesaugt wird, vorzugsweise aus der Herstellung der Bastfasern, wie z. B. Flachs, Hanf, Jute und dergleichen, der Blattfasern wie z. B. Sisal, Kenaf, und der Stauchanteil der Banane, von Samenfasem, wie z. B. Baumwolle, oder der Fruchtfasern wie z. B. Kokos oder von Holzfaser wie z. B. Cellulosefaser, und andere wie z. B. Holzfasern.

Es hat sich als vorteilhaft herausgestellt, wenn die Bestandteile in einem Verhältnis von 20 bis 80 Volumenprozent, vorzugsweise 30 bis 50 Volumenprozent dem Streusalz bzw. dem Mittel zur Erniedrigung des Gefrierpunktes beigemischt werden, da diese Mischung erstens die Salzmenge deutlich reduziert und die bekannte ähnlich wie Sand, Asche oder ähnlichen Materialien den "Soforteffekt" erzielt. Innerhalb dieses Volumenverhältnisses hat sich gezeigt, dass der Effekt der unmittelbaren und ohne Gefahr verbundenen Begehung bzw. des möglichen Befahrens des Verkehrweges verstärkt wird.

Auch zeigte sich bei der Zumischung in einem Verhältnis von größer als 10 Gewichtsprozent eine deutliche Verbesserung der Begehbarkeit der auftauenden Wegen.

Es hat sich ferner herausgestellt, dass der erfindungsgemäße Effekt sich besonders dann vorteilhaft auswirkt, wenn die Schäben aus Flachs, Hanf, Ölleinen und/oder Sisal bestehen.

Weitere vorteilhafte Ausführungsformen sind Gegenstand der übrigen Unteransprüche.

## Patentansprüche

1. Winterstreumittel, welches aus einem Mittel zur Erniedrigung des Gefrierpunkts und aus dem Mittel zur Erniedrigung des Gefrierpunkts beigemischten, die Feuchtigkeit aufnahmefähigen Bestandteilen, besteht, **dadurch gekennzeichnet, dass** die Bestandteile eine Form mit einem Längs-zu-Quer-Verhältnis von größer als 1 zu 2 haben und die Bestandteile Pflanzenschäben aus der Herstellung von Bastfaser, Blattfaser, Samenfaser oder Fruchtfaser sind.

2. Winterstreumittel nach Anspruch 1, **dadurch gekennzeichnet, dass** das Mittel zur Erniedrigung des Gefrierpunkts Streusalz ist.

3. Winterstreumittel nach Anspruch 1, **dadurch gekennzeichnet, dass** das Mittel zur Erniedrigung des Gefrierpunkts dem Bestandteil in flüssiger Form zugeführt wird.

4. Winterstreumittel nach einem der Ansprüche 2 oder 3, **dadurch gekennzeichnet, dass** das Mittel zur Erniedrigung des Gefrierpunktes aus einer Mischung von festen und/oder flüssigen Formen besteht.

5. Winterstreumittel nach einem der Ansprüche 1 bis 4, **dadurch gekennzeichnet, dass** die Schäben holzartige Bestandteile von Pflanzen aus der Herstellung von Flachs, Hanf, Ölleinen, Strohfaser und Sisal resultierend sind.

6. Winterstreumittel nach einem der Ansprüche 1 bis 5, **dadurch gekennzeichnet, dass** die Bestandteile in einem Verhältnis von 30 bis 50 Volumenprozent beigemischt sind.

7. Winterstreumittel nach einem der Ansprüche 1 bis 6, **dadurch gekennzeichnet, dass** die Bestandteile in einem Verhältnis von größer 10 Gewichtprozent, vorzugsweise 30 Gewichtprozent beigemischt sind.

8. Winterstreumittel nach einem der Ansprüche 1 bis 7, **dadurch gekennzeichnet, dass** zusätzliche Antirutschmittel wie Splitt und/oder Sand zugeführt werden.

## Claims

1. Winter grit, consisting of agents for decreasing the freezing point and humidity-absorptive constituents from said agents for decreasing the freezing point, **characterized in that** the constituents are formed in a longitude-to-lateral proportion of greater than 1 : 2 and the constituents are plant shives of the production of bast fibres, leaf fibres, seminal fibre or fruit fibre.

2. Winter grit in accordance with claim 1, **characterized in that** the agent for decreasing the freezing point is de-icing salt.

3. Winter grit in accordance with claim 1, **characterized in that** the agent for decreasing the freezing point is fed to the constituent in liquid form.

4. Winter grit in accordance with one of the claims 2 or 3, **characterized in that** the agent for decreasing the freezing point consists of a mixture of compact and/or liquid forms.

5. Winter grit in accordance with one of the claims 1 to 4, **characterized in that** the shives are woodlike constituents of plants resulting from the production of flax, hemp, oil linen, straw fibre and sisal.

6. Winter grit in accordance with one of the claims 1 to 5, **characterized in that** the constituents are added in the proportion of 30 to 50 % by volume.

7. Winter grit in accordance with one of the claims 1 to 6, **characterized in that** the constituents are added in a proportion of greater than 10 % in weight, preferably 30 % in weight.

8. Winter grit in accordance with one of the claims 1 to 7, **characterized in that** additional slip-resistant means, such as crushed stone and/or sand are added.

## Revendications

1. Substance antigel consistant en un agent pour baisser le point de congélation et des éléments constituants absorbants de l'humidité étant ajoutés à l'agent pour baisser le point de congélation, **caractérisée en ce que** les éléments constituants absorbants ont une forme avec un rapport longitudinal-transversal de plus de 1 à 2 et sont des restes de plantes provenant de la production de fibres de raphia, fibres de feuille, fibres de semence ou fibres de fruit.

2. Substance antigel selon revendication 1, **caractérisée en ce que** l'agent pour baisser le point de congélation est du sel de déneigement.

3. Substance antigel selon revendication 1, **caractérisée en ce que** l'agent pour baisser le point de congélation est ajouté à l'élément constituant absorbant en forme liquide.

4. Substance antigel selon une des revendications 2 ou 3, **caractérisée en ce que** l'agent pour baisser le point de congélation consiste en un mélange des formes solides et/ou liquides.

5. Substance antigel selon une des revendications 1 à 4, **caractérisée en ce que** les restes des plantes sont des éléments constituants boiseux des plantes provenant de la production de lin, chanvre, lin d'huile, fibres de paille et de sisal.

6. Substance antigel selon une des revendications 1 à 5, **caractérisée en ce que** les éléments constituants absorbants sont ajoutés dans la proportion de 30 à 50 pour cent en volume.

7. Substance antigel selon une des revendications 1 à 6, **caractérisée en ce que** les éléments constituants absorbants sont ajoutés dans la proportion de plus de 10 pour cent en poids, préférablement 30 pour cent en poids.

8. Substance antigel selon une des revendications 1 à 6, **caractérisée en ce que** des éléments constituants anti-glissant supplémentaires comme des gravillons et/ou du sable sont ajoutés.
